# EUROPEAN PATENT APPLICATION

(11) **EP 2 375 637 A1**
(43) Date of publication of application: **12.10.2011**
(21) Application number: 10250540.1
(22) Date of filing: 22.03.2010
(51) Int. Cl.: H04L 12/24

(54) **Network routing adaptation based on failure prediction**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

Embodiments of the invention provide a system that predicts network events and triggers a pre-emptive response. An example implementation predicts network link failures and creates a change in the network before the failure actually happens by instigating policy-based adjustment of routing parameters. In particular, an embodiment of the invention operates in two phases. In the first phase the historical operation of a network is observed (B.4.2), to determine observed relationships between link or cluster failures that have occurred, and subsequent failures of different links or clusters. From these observed relationships failure rules can be derived (B.4.4) that are then applied to control routing in the network during a second, control, phase. That is, in the second, control, phase, the derived failure rules are applied such that if a link or cluster failure occurs, then from the rules a prior knowledge of what additional links may fail in the next α time period is obtained, and remedial action can then be taken such as routing data traffic away from the links that are predicted to fail (B.4.6).

## Description

### Technical Field

The present invention relates to a method and system for adapting the routing of data traffic through a data network in dependence on one or more predicted events within the network.

### Background to the Invention

The rapid growth of the Internet and demand for broadband connectivity has led several large operators to deploy their own Internet Protocol (IP) networks. These are used to support bandwidth-hungry multimedia applications. Despite being engineered to cope with the demands of these applications, some of which are inelastic and require a guaranteed Quality of Service (QoS), unplanned failures occur at various protocol layers, exhibiting themselves as loss of IP connectivity between network components.

When such failures occur, the network is reconfigured in real-time with a process consisting of the following processes: i) failure detection; ii) generation, propagation and interpretation of Link State Protocol Data Units (LSPs) throughout the network; iii) the re-computation of routing tables in every relevant router in the network by routing daemons implementing Interior and Exterior Gateway Protocols; and iv) implementation of these new tables on subsequent incoming data, after which the network has regained stability. The time period taken for this process, plus any allowed margin, shall herein be referred to as the 'network reconfiguration period' α. During this period α, packets that have already been routed towards this link are often dropped if the queuing buffers overflow. The situation is exacerbated if the failed component is a core router. As a consequence, Quality of Service is degraded, whereas it would be desirable if QoS could be maintained, even in the face of possible failures.

### Summary of Examples of the Invention

This invention solves this challenge by proposing in one embodiment an intelligent network management system that predicts a link failure event and commences the time-consuming network reconfiguration process before the failure actually occurs. In one embodiment any packets that have already been directed at the deteriorating link can still be handled by the link because it is still functional, without new packets being addressed to it. In such an embodiment the link load is also eased by this process to allow possible recovery, especially if traffic overload is the cause of failure. As a consequence, given adequate prior notice, packet loss due to link failures can be eliminated allowing IP networks to provide the level of QoS offered by their telephony counterparts and demanded by several applications and third-party CPs.

In one embodiment predictive rules of the form 'L1←L2' are derived, which have the meaning that "if a cluster of links, collectively referred to as L2, fails, link cluster L1 will fail within the next α seconds". In the embodiment each rule is provided with a degree of confidence β, so that when failure of L2 is logged in real-time, the system automatically triggers the reconfiguration process. In one embodiment routing parameters (such as, for example, tables and/or link costs) are then updated to route packets away from cluster L1 before it fails. In this embodiment L2 and L1 are known as the antecedent and consequent of the rule respectively, and each may comprise any number of individual links (i.e. a link cluster or an item set) that fail simultaneously or within a small margin, Y, of each other. The value of α is easily adjustable and pre-programmed. It may depend on several factors including size of the managed network, predictive capacity of the process and also must not be too short that slight delays in receiving 'hello' messages from neighbouring routers results in unnecessary recuperative changes being triggered.

In other embodiments, predictive failure rules are derived based on other events, other than consequent link failures following observed antecedent link failures per se. For example, in one embodiment a failure rule based on any consequent link failures following the generation of a particular type of network message, or following the start-up of a particular type of network client application may be formed. In other embodiments time based failure rules can be formulated, for example if it is observed that a particular link or cluster fails at a set time or within a regularly definable time period (for example, if maintenance is scheduled regularly). That is, failure rules can be derived that relate consequent link or node failures to antecedent events of several different types, preferably observed via network log messages.

In view of the above, from one aspect there is provided a method of routing data in a data network, comprising: a) storing failure rules defining predicted consequent failure(s) of one or more network components in dependence on the occurrence of one or more antecedent network events; b) monitoring operation of the data network so as to observe the occurrence of any of the antecedent network events; c) in the case of an antecedent network events being observed, using the stored failure rules or rules relating to the observed antecedent network event to predict the future failure of one or more network components; and d) controlling the network components so as to change the routing of data in the network in dependence on the prediction of future failure of one or more of the network components.

In one embodiment one or more of the failure rules relate an observed consequent failure of a network link to an observed antecedent failure of a network link, the observations being historical network observations.

In one embodiment the change that is made to the routing of data is to route data away or around the network component that is predicted to fail, such that the load on the network component is removed. In another embodiment the change that is made is to reduce the amount of data that is routed through the component, such that the load is reduced, but not removed entirely. In another embodiment the change that is made to routing in the network may be to change the network admission control conditions, so as to reduce the amount of data entering the network, such that the whole network load reduces.

In one embodiment a network component may comprise a network link, or a network router, or part of such which is not necessarily a complete device, but could be just a port on a router or a logical link (several logical flows over the same piece of wire).

In one embodiment one or more of the failure rules relate an observed consequent failure of a network component to one or more observed antecedent network events, the antecedent network events being one or more from the group comprising: a network client application starting up; present time and/or date; and/or a network log message being generated.

One embodiment further comprises storing failure rule confidence values, wherein a failure rule is used to predict a network failure in dependence on its confidence value.

One embodiment further comprises validating a stored failure rule against network observation data obtained after the rule has been implemented so as to determine if said rule should still be applied.

In one embodiment the failure rules are generated by: i) analysing historical network log data so as to identify a data set of tuples of first network component failures followed by second network component failures within a pre-determined time thereafter; and ii) deriving the failure rules from the tuples in dependence on the frequency of occurrence of the identified tuples in the data set. In this embodiment the deriving may be performed using an association rule mining algorithm.

In one embodiment the failure rules are repeatedly updated in dependence on the observed network operation.

In one embodiment a hierarchy of failure rules is provided, comprising a plurality of sets of failure rules, each set relating to a part of the network, a set of failure rules belonging to a lower set in the hierarchy relating to a smaller part of the network than a set of rules belonging to a higher set in the hierarchy. In this embodiment each set of failure rules is associated with a network management server responsible for a part of the network, a hierarchy of network management servers being provided corresponding to the hierarchy of the sets of failure rules, wherein a failure rule relating to network components in two or more parts of the network is administered by a network management server at a level in the hierarchy that encompasses the parts concerned.

Another aspect of the invention provides a computer program or suite of computer programs so arranged such that when executed by a computer it/they cause the computer to operate according to any of the preceding embodiments. In addition, another aspect of the invention provides a computer readable media storing the computer program or at least one of the suite of computer programs.

A further aspect of the invention provides a system for routing data in a data network, comprising: a) a rule store arranged to store failure rules defining predicted consequent failure(s) of one or more network components in dependence on the occurrence of one or more antecedent network events; b) a network monitor arranged to monitor operation of the data network so as to observe the occurrence of any of the antecedent network events, and in the case of an antecedent network event being observed, use the stored failure rules or rules relating to the observed antecedent network event to predict the future failure of one or more network components; and d) one or more network controllers arranged to control the network components so as to change the routing of data in the network in dependence on the prediction of future failure of one or more of the network components.

Another aspect of the invention provides a system, comprising: a) means for storing failure rules defining predicted consequent failure(s) of one or more network components in dependence on the occurrence of one or more antecedent network events; b) means for monitoring operation of the data network so as to observe the occurrence of any of the antecedent network events; c) means for using the stored failure rules or rules relating to the observed antecedent network event to predict the future failure of one or more network components; and d) means for controlling the network components so as to change the routing of data in the network in dependence on the prediction of future failure of one or more of the network components.

Another aspect of the invention provides an apparatus, comprising: at least one processor; and at least one memory including computer program code, the at least one memory and the computer program code configured to, with the at least one processor, cause the apparatus to perform at least the following: a) store failure rules defining predicted consequent failure(s) of one or more network components in dependence on the occurrence of one or more antecedent network events; b) monitor operation of the data network so as to observe the occurrence of any of the antecedent network events; c) in the case of an antecedent network events being observed, use the stored failure rules or rules relating to the observed antecedent network event to predict the future failure of one or more network components; and d) control the network components so as to change the routing of data in the network in dependence on the prediction of future failure of one or more of the network components.

### Brief Description of the Drawings

Further features and advantages of embodiments of the present invention will become apparent from the following description thereof, presented by way of example only, and by reference to the accompanying drawings, wherein like reference numerals refer to like parts, and wherein: -
Figure 1 is a table illustrating relationships between observed link failures;
Figure 2 is a graph illustrating how rule confidence can fall over time;
Figure 3 is a diagram illustrating different layers of control and prediction of link failure in a network;
Figure 4 is a flow diagram illustrating an overview summary operation of an embodiment of the invention;
Figure 5 is a block diagram of the hardware elements involved in an embodiment of the invention;
Figure 6 is a flow diagram illustrating detailed operation of an embodiment of the invention; and
Figure 7 is a block diagram of a server according to an embodiment of the invention.

### Description of the Embodiments

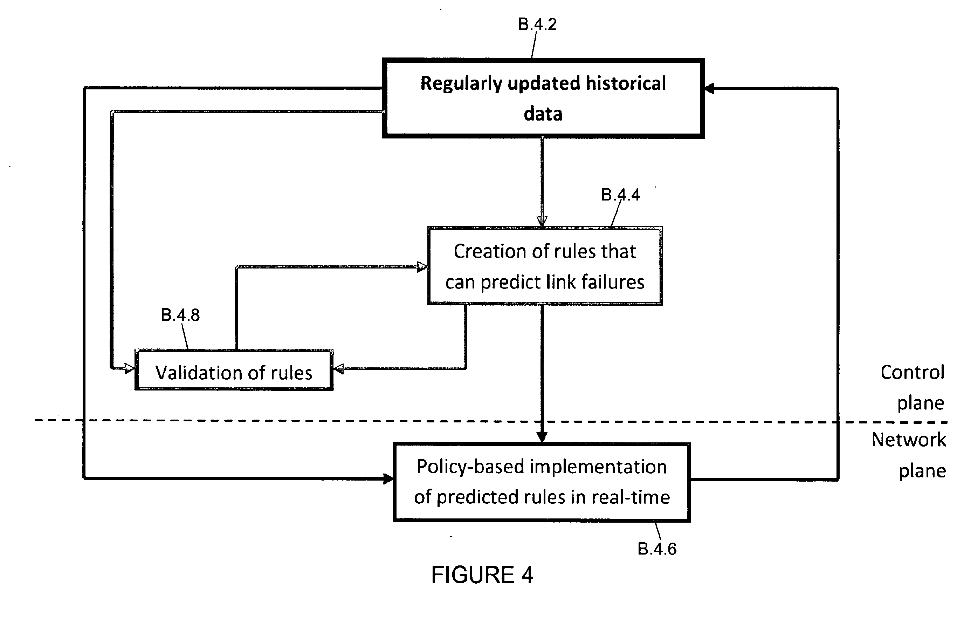

An overview of the operation of embodiments of the invention will now be described with respect to Figure 4, followed by further description of a more detailed embodiment.

Embodiments of the invention provide a system that predicts network link failures and creates a change in the network before the failure actually happens by instigating policy-based adjustment of routing parameters. In particular, an embodiment of the invention operates in two phases. In the first phase the historical operation of a network is observed (B.4.2), to determine observed relationships between link or cluster failures that have occurred, and subsequent failures of different links or clusters. From these observed relationships failure rules can be derived (B.4.4) that are then applied to control routing in the network during a second, control, phase. That is, in the second, control, phase, the derived failure rules are applied such that if a link or cluster failure occurs, then from the rules a prior knowledge of what additional links may fail in the next α time period is obtained, and remedial action can then be taken so as to route data traffic away from the links that are predicted to fail (B.4.6). One advantage of such a system is that the prior knowledge of failure allows pre-emptive action such that new packets are routed away from the failing link while it still has the capacity to handle packets that have already been addressed to it. Another advantage of this is that the link load is eased, allowing the failing link to recover if traffic congestion is the cause of failure. With such an arrangement, one can maintain a desired Quality of Service in the network by triggering the response to a failure and achieving network stability before a predicted failure even happens.

In addition, in order to allow for network evolution to occur, once created the failure rules are subject to repeated validation to ensure that they are still valid, and apply to the network in its present state (B.4.8).

A more detailed embodiment will now be described with respect to the drawings.

Within the detailed embodiment to be described, the operation of the embodiment falls into several different categories. Firstly, a discussion of how the failure rules themselves are initially derived from historical observation data, and how further rules may be repeatedly derived during operation of the network under the control of the embodiment. Following this, it is also necessary to consider how the failure rules evolve, and whether their validity should be maintained as time progresses.

In addition, consideration is also given to where in the network individual control elements may be located, and in particular regarding the hierarchy of control elements, and how failure rules and remedial action can cross catchment areas. Following this further details of the hardware architecture that is employed in the embodiment, and the functional operation thereof are discussed.

### Failure Rule Derivation

As noted above, the first phase of operation in the presently described embodiment is to derive failure rules, that can then be used to control routing in the network subsequently.

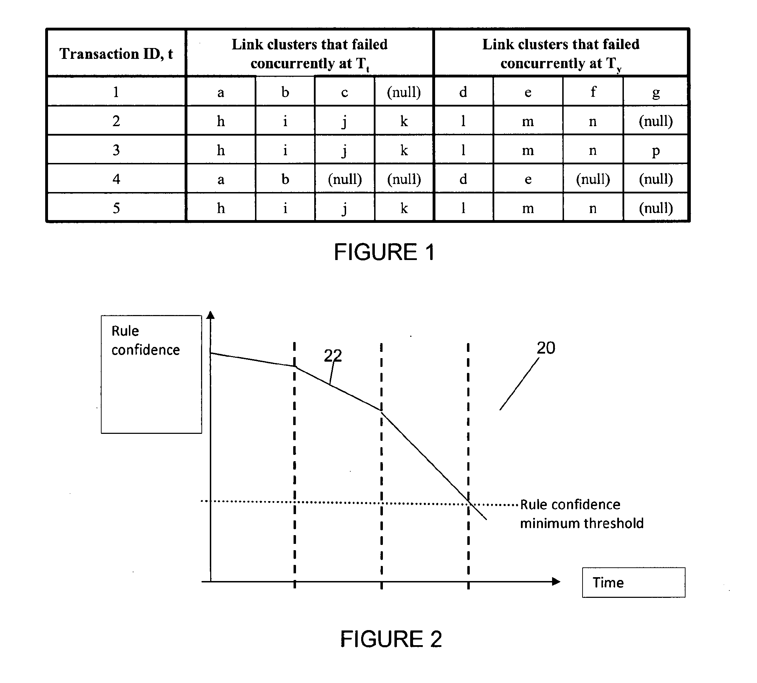

Periodically-updated historical data from network management agents is typically held in large repositories. Such raw data could consist of real-time alarms or 'traps' sent from the agents to its allocated network manager or to a listener capturing such data for monitoring purposes. The first step in the first phase is to therefore identify useful information such as keywords that denote a link failure that is being reported. This can be done either from prior knowledge or by detailed searches of the repository. Due to variations in reporting mechanisms and protocols, it is likely that several keywords will denote a link failure. These identified keywords are then used to parse incoming real-time logs. Once identified, the rows that contain these keywords are filtered out and with more data processing, a transaction database such as that shown in Figure 1 is constructed. Note that within Figure 1 Ty - Tₜ ≤ α.

With reference to Figure 1, for each transaction ID (t), all links in the right side column (making one link cluster or 'item set') have failed at time T_{y}, which is up to α seconds after the failure of the cluster of links on the left side column (at Tₜ). Note similarities between rows t=1 and t=4, and also t=2, t=3 and t=5.

Having obtained the identified observed failure relationships, it is then necessary in the present embodiment to consolidate such similarities into rules. This is performed as follows.

The created transaction database (Figure 1) is loaded into an association rule miner that creates rules (using the a priori algorithm or similar) that have a minimum specified antecedent or rule support, which is the number of times the antecedent link cluster (or rule) occurs in the transaction database, and/or minimum rule confidence, which is the number of times the rule has been observed to be correct out of all the times that it is deemed applicable. (For example, in a database of 10 entries, if the antecedent appears 5 times, and the consequent is observed with this antecedent thrice, the support of this rule in the software used is 5 and the rule confidence is 3/5.) A suitable association rule mining algorithm that may be used in this respect is described by R. Agrawal et al., "Mining association rules between sets of items in large databases," in ACM SIGMOD International Conference on Management of Data, Washington, DC, 1993, pp.207-216, or also by C. Borgelt, (2009, May 05), "Frequent Pattern Mining" [online], available: http://www.borgelt.net/courses.html#fpm.

As will be described in more detail later, in the second phase of operation these derived rules, of the form 'L1←L2', are stored in the present embodiment when the system is first run. The incoming logs are then monitored in real time and when a failure of the antecedent of any of the stored rules is spotted (i.e. L2 in the above rule), the network reconfiguration process is commenced straight away and the network restores itself assuming L1 is about to fail before the failure occurs. This communication between the monitoring application in the control layer network manager and the lower layer managed agents who implement the routing reconfiguration is described further later.

Note that the parameters used for prediction are not confined to using one link cluster failure to predict another. In other embodiments Pearson correlation or neural networks techniques such as the multilayer perceptron can be used to identify other parameters in the available historical data that could possibly cause and/or indicate a link failure. Embodiments of the invention require only information from status logs which are then used to predict failures in network links. The information can be failure messages or any other message, e.g. generated by applications. One of the main aspects of embodiments of the invention is that of how to make use of predictive information coming from a control intelligence in the network so as to change routing data. One embodiment of this invention predicts one or more network link cluster failures occurring α seconds after another link cluster failure. However, it is easy to understand that in other embodiments of the invention a number of other events can be predicted from a range of data logs, and that failure rules can then subsequently be derived and used to predict failure and control traffic routing. Examples of such failure rules include but are not limited to the following types: Type 1: If message sequence *abc* appears, link failure messages for links d, e and f appear within α seconds.
Type 2: If application a is initiation/altered, link b fails within α seconds.
Type 3: Link a fails every day of the week at 10:00AM.
Type 4: Link a fails within α seconds if the parameters *x*, *y* and *z* report values of *x₁*, *y₁* and *z₁* respectively.
Type 5: If event E occurs then L1 will fail (E could also be any combination of events).
Type 6: If x > t then L1 will fail (where x is a value derived from some event and t is a threshold).
Type 7: Instead of x > t we could have an arbitrary logical combination of values tested against thresholds, e.g. x > t1 and y > t2 or z > t3 etc
Type 8: If M(X) > t then L1 will fail, where M is a numerical model (system of equations, a neural network etc) and X is a vector of values derived from observed events (counts, averages, network parameters etc).

Some or all of these different types of failure rule may be included in one or more embodiments of the invention.

Note also that embodiments of the invention do not require a particular process to be used for prediction. While in the detailed embodiment being described association rule mining is used, it is also possible in other embodiments to make these predictions using a variety of other data analysis techniques, for example Bayesian Networks, Hidden Markov Models etc.

### Real-time validation of Failure rules

Before going on to describe how the derived failure rules can be used to control data traffic routing, it will be useful to take a look at another aspect of any derived rule, being that of the length of time for which it is valid, given evolution of the network. In this respect, aside from using the derived rules to better manage network routes in real-time it is also important to periodically evaluate the validity of the rules in parallel. The following process has been devised to accomplish this aspect.

The confidence of a rule indicates its 'correctness'. If the network has changed such that a rule is less and less applicable, its confidence will decrease gradually over every evaluated time period. This is shown in Figure 2, with plot 22 on graph 20 illustrating how the confidence in a rule declines over time since it was first derived and deployed, to reflect how routing changes and evolution in the network make a rule based on previously obtained data increasingly invalid.

More particularly, with reference to Figure 2, if a rule's confidence is evaluated periodically, the gradient of the best fit line that connects the last n rule confidence values is named the 'dynamic'. A predictive rule is flagged in the rule repository in which it is stored if the value for its dynamic is consistently negative over M periods and then dropped from the repository if its rule confidence falls below a minimum acceptable threshold. This change is then communicated to the implementing nodes at the appropriate opportunity, either by actively pushing this information to the appropriate (software or hardware) agent at each node in real-time or at regular intervals, and either in incremental fashion (i.e. only new or altered rules are communicated) or in bulk (i.e. all relevant rules pushed every time).

In terms of how a rule is validated over time, there are several options. For example, in one embodiment rules can be evaluated periodically using transaction data that was not considered at the time of the previous evaluation. With such an arrangement a transaction table such as shown in Figure 1 is formed from log data obtained from the network operation since the rule was first derived. The rule is then tested against this new set of data, and a confidence value for the rule re-computed.

An alternative to the above is for all rules in the repository to be flushed out at every evaluation and re-computed from scratch. In such an arrangement in another embodiment then again transaction data from network logs is compiled, and completely new rules then re-computed on the basis thereof. The trade-off between these two techniques depends on ease of data management and communication of rules to managing agents, and the computational complexity and resources required for processing all stored data every time.

However, whilst rule validation is important to allow for network evolution, there is a downside to validating rules in this manner. More particularly, if a given rule is correct, when it is implemented, it could cause the predicted failure to no longer occur (especially if traffic overload is the original cause of failure). In such a case, feedback from the network over the next M periods would cause the rule to be dropped because the rule confidence would no longer hold. For example, if the rule is validated against log data obtained from when the rule was first implemented, then the operation of the rule may in fact have prevented the failure that the rule predicts from occurring, and hence the operation of the rule effectively invalidates itself.

In order to get around such problems, in another embodiment the rule evaluation could be done by keeping a repository of recently extinct rules from which a recently decommissioned rule can be reactivated if its rule confidence increases after it has been decommissioned (which therefore requires its confidence to be monitored for N periods even after it is no longer used). However, this may still not be the most efficient way to validate rules as stability is never achieved in the control plane (some good rules are constantly dropped and reactivated). In yet another embodiment, therefore, operator knowledge may be used to single out rules that should never be dropped. Still another embodiment could use a strategy that switches off rules with decreasing confidence to test if the rule is still required, and then reactivates the switched off rule immediately if the predicted failure indeed occurs.

With the above, therefore, within embodiments of the invention some form of rule validation is required to take place, to account for network evolution. However, how that validation occurs can take many different forms, and any of the above described techniques can be used in embodiments of the invention.

### Hierarchical Management of Failure Domains across the Network

Thus far we have discussed how rules are derived, and validated. In this section we introduce the hierarchical arrangement of hardware and software agents employed in an embodiment of the invention to permit management of rule generation, and employment of the rules to control routing.

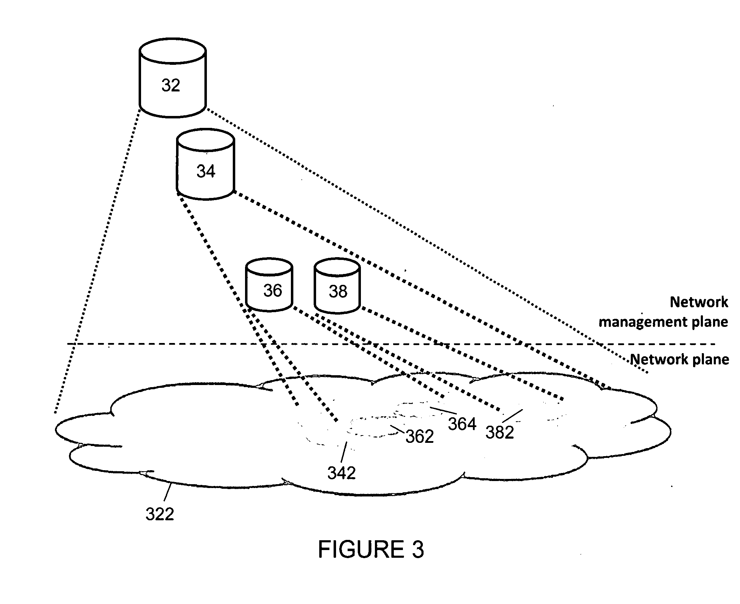

The prediction process used in embodiments of the invention relies on retrieving network information from a large catchment area - in fact, the larger the area, for a given granularity of network data per unit area, the more likely it is that an association that exists can be identified by the rule miner and a larger number of link failures can be predicted. Thus, the rule miner is assumed to operate on a central management platform 32, as shown in Figure 3. Additionally, further management platforms 34, and 36 and 38 are also provided, arranged hierarchically, with each management platform generating and deploying rules relating to its own area of the network to which it relates.

Each instance of the network management application running on each management platform (described further later) can either transfer all its rules to all its managed agents and each agent then filters out rules that are only relevant for itself or this filtering intelligence is performed by the manager itself and it only sends an agent the rules it needs and handles cross-catchment area rules by itself. Thus, for example, management platform 32 may propagate down to platform 34 those rules that apply to network nodes and links within network area 342, whilst retaining control of those rules applying to the other parts of network area 322 other than part 342. Similarly, management platform 34 may propagate downwards rules relating to network areas 362 and 364, managed by management platform 36, and area 382, managed by management platform 38.

The above described hierarchy is carried through to the smallest network granularity possible with a trade-off against not making the catchment area too small that the interactions are too infrequent and confined that prediction is no longer possible. Whether or not the rule miners in the hierarchy collaborate with each other and communicate when an event is likely to trigger cross-catchment area failures depends on network policy, traffic overheads generated by the required information sharing and the capabilities of the implemented NMS protocol. This is an important decision when there are multiple management applications handling parts of the network that are in the same level in the hierarchy (such as areas 362, 364, and 382 in Figure 3) - i.e. in a distributed NMS framework. Should cross-catchment area manager-to-manager communication be enabled, MPLS or a similar mechanism may be used to ensure that such management information predicting a failure is propagated to the relevant manager in sufficient time.

Note that in the present embodiment rules themselves need not be communicated from intelligence nodes to network nodes; only the actions that the routers must take to respond to a given predicted failure need be sent to them. Rules will have to be communicated between instances of the same intelligent software i.e. the managing agents running on the management platforms; especially if they have the same power in the network (e.g. rules that apply across catchment areas will be communicated from the higher level server to the local managers of the relevant catchment areas).

In terms of how rules are propagated down the hierarchy, and how management actions are passed on to routers in the network, in one embodiment the basic Simple Network Management Protocol (SNMP) is used as an example. That is, SNMP is only an example of a protocol that can be used to communicate decisions. Even a custom-built protocol for this purpose could be used. The actual protocol used is only the carrier for the system to transport its instructions to routers and embodiments of the invention include all variations of protocols that can be used for this purpose.

In the case of SNMPv1, since it does not support imperative commands from manager to agent, the managing application server in the management platform functions with the SNMP engine to generate Set requests as explained in Stallings, W., "SNMP, SNMPv2, SMNPv3, and RMON1 and RMON2", 3rd ed., Addison-Wesley, 1999. Note that the management application must know which Management Information Base (MIB) parameters it wishes to change in the agent's MIB in order to trigger a change before its 'real' cause has happened in real life and this knowledge can be gained from observing a 'real' scenario and triggering the same change in the predicted scenario. However, an exception occurs when a link is predicted to fail but does not because the pre-emptive action has eased its load, allowing it to recover. In this case, an override must be devised where the managed agent could actively communicate this recovery if the link is still alive after α seconds of prediction so that the rule mining intelligence can use this information in future predictions. The intelligent managers can also decide which routers within their catchment area must be affected in responding to a predicted failure, so that only specific routers respond to a given predicted failure. As an extension to this feature, it is possible to extract this node-choosing feature as a separate generic entity that decides, given an input set of priorities and a current model of the network, which nodes should proactively change their routing data in order to respond to a predicted failure. (In this example, such a generic system could be instructed (or dynamically gain the knowledge) that an important factor in choosing nodes is the value of the traffic that is about to be transmitted from that node which would be lost if the predicted link failure occurred. Another important priority could be the current occupancy of the router buffers.)

Note also that encryption or some form of security/initial authentication should be devised to prevent hackers placing message generators that flood the routers with Set requests. Even if the Set requests are not fulfilled because these senders are not authenticated to access the MIBs, processing of these messages will occupy router capacity and could result in Denial of Service attacks.

### Front-end visualisation

Additionally, in one embodiment a GUI is also proposed to allow a near-real-time visualisation of the failure model created from the predictions - the thickness of a line between two network components is proportional to the probability of failure of one, assuming the other has already failed. This front-end allows an operator to monitor and/or manually intercept the process if necessary.

### Architecture

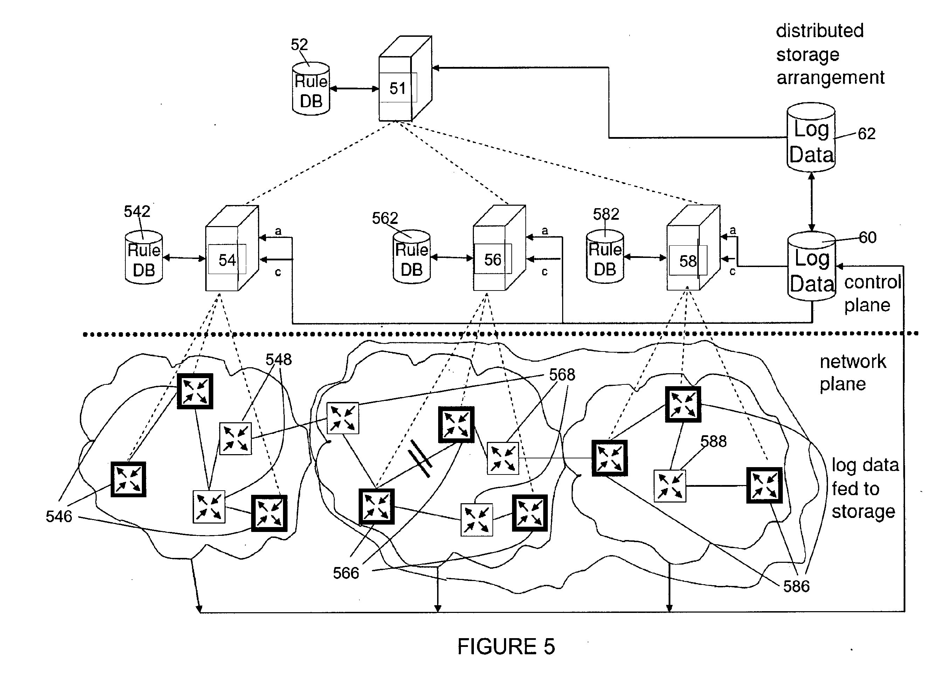

Figure 5 shows an example architecture provided by an embodiment of the invention. Management platform servers 51, 54, 56, and 58 are the servers that run the intelligence. Each server has four tasks, with interfaces between each of the segments that implement each task:
a. Create rules from updated historical data and validate them.
b. Intelligently choose nodes at which proactive changes to routing are to be effected in response to a predicted failure.
c. Identify when failure of the antecedent cluster has been logged in real-time and trigger (b), which will pass its output to (d) below.
d. Create SNMP (or similar) messages to these chosen nodes and implement the process of routing traffic away from potentially failing links.

Each server can have its own rule database (52, 542, 562, 582) or access a shared repository, where currently valid rules are stored, information flows both ways in these connections.

Each of the servers 54, 56, and 58 controls a particular part of the network, comprising link routers 546, 548, 566, 568, 588, and 586. The routers marked in bold in the network plane (546, 566, 586) are the intelligently chosen routers by the servers. These are the routers that the servers will contact to create changes in routing. The routers that are not in bold (548, 568, 588) are nevertheless a part of the network.

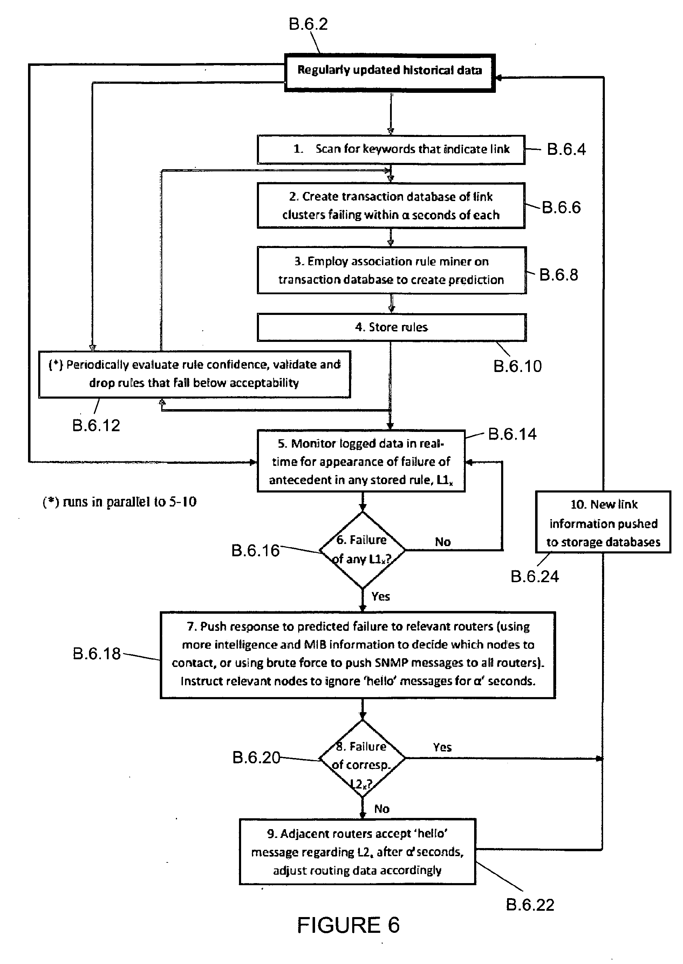

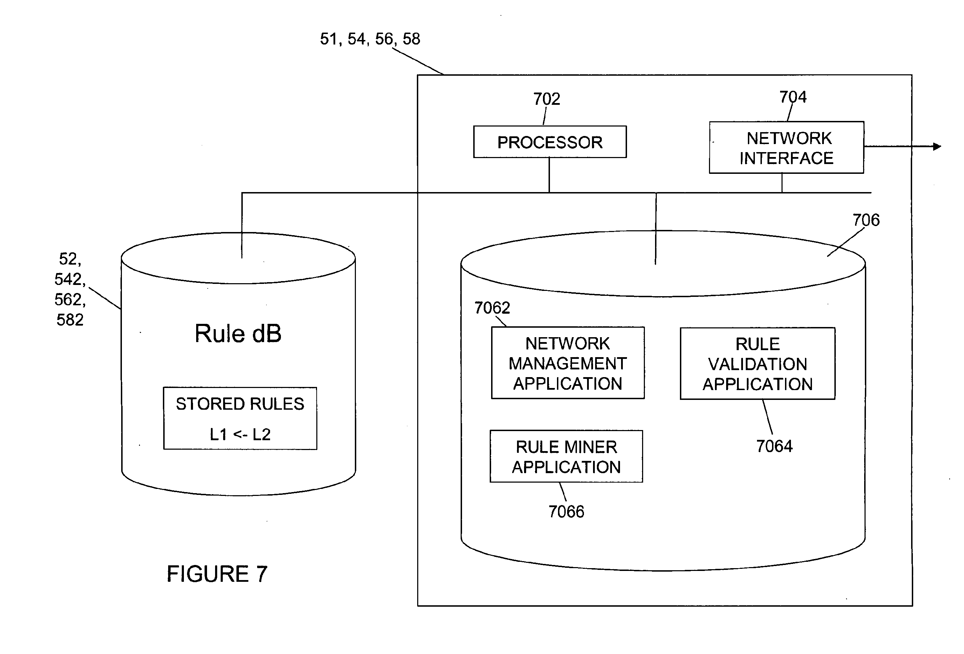

Figure 7 shows an example arrangement of one of the servers 51, 54, 56, or 58. More particularly, a server comprises a processor 702 and a network interface 704, that allows the server to communicate with other network elements. Also provided is a computer readable medium 706 such as a hard disk drive, on which is stored a network management application 7062, a rule validation application 7064, and a rule miner application 7066. The rule miner application 7066 is arranged, when run on the processor 702, to derive failure rules from network log data, in the manner described previously. The rule validation application 7064 when executed by the processor validates the derived failure rules, again as described previously. Finally, the network management application 7062 when run on the processor is provided to monitor network events and compare them against the derived failure rules presently in force, and to decide on remedial action. The operation of the network management application 7062 will be described further later with respect to Figure 6.

Figure 5 only shows a two level hierarchy of intelligence. The two servers on the right hand side sit at equal levels of power (they are managing adjacent 'clouds' of routers as can be seen in the diagram) and effect changes only within their catchment area (marked as a cloud around their corresponding routers). The master intelligence handles cross catchment area rules. In this example, it is proposed that the master intelligence does not bypass the lower intelligence when a cross catchment area rule is to be acted upon. It sends the relevant rule/decision to the lower level server, which then creates the required changes. In one embodiment, the master intelligence could be assigned to handle cross-catchment area rules, which means it would also have to perform task (a-c) above. Its task (b) would be correspondingly altered such that it would have to choose which local managers to communicate which rules to and how (frequency of updates must be decided upon), rather than contacting network nodes directly. In another embodiment, cross-catchment area rules are ignored completely so that the master intelligence is freed from performing task (d). This choice depends upon the trade off between the degradation of QoS suffered from discarding these cross-catchment area rules against the complexity involved for both the master intelligence and the expedited carrying system (using MPLS or similar)potentially required in not discarding them.

Whilst Figure 5 shows a two-level hierarchy, this two-level intelligence is extensible in other embodiments to many level hierarchies, as described previously with respect to Figure 3.

The arrows that flow out from the cloud into the data warehouses 60 and 62 on the far right correspond to B 6.24 in Figure 6 (to be described). This log data is taken into each server for tasks (a) and (c) - hence the two arrows branching into each server. The data warehouses that hold the log data can be distributed (as shown in the figure) or centralised. Whether tasks (a) and (c) obtain their data directly from these warehouses or from listeners in the network (not shown in diagram) depends upon the timescales between each update of the warehouses. If this update does not happen in real-time, task (c) will receive its real-time data from listeners/aggregators directly. If this is the case, the two arrows branching into the server are separated out and one of them points in from the relevant listeners.

### Functional Operation

Figure 6 illustrates the functional operation of the architectural arrangement of Figure 5. In this embodiment it is assumed that the network utilises the Simple Network Management Protocol (SNMP). It is also assumed that the network management application that creates predictive rules, monitors incoming log data, creates and sends SNMP Set messages to selected routers in the network is run centrally to manage an autonomous system of n routers (this is the catchment area of the application instance). Some of these routers are interconnected (via IP links) and others establish connectivity to networks outside of this area. There is only one instance of the application in this network - the conditions to be considered in a distributed architecture (i.e. multiple application instances collaborating to manage a larger catchment area) are more complex as it requires collaboration between managers of different catchment areas and the considerations for this have been described above. It is also assumed that the user wishes to predict network link failures based on other link failures (other examples of predictions have been described earlier). Real-time historical data about link failures in the catchment area is assumed to be available to the application from either a central repository/passive listener(s) in the network or directly from the routers themselves.

Firstly, it is assumed that there is available a set of historical network operational log data, from which initial rules can be derived. As discussed above, during the operation of embodiments of the invention, this log data is updated with events that occur due to the continuing operation of the network, as shown at B 6.2.

At B.6.4 the user analyses historical data to identify key words that indicate an antecedent or consequent event (failures of link clusters L2 and L1 respectively in this case). Alternatively, these key words can be obtained by the rule discovery process from a previously defined dictionary or thesaurus. Example key words include: "ISIS link 1 failure", "BGP link 1/0 down/up" etc. Link IDs '1/0' and '1' can be used along with their IP addresses to create a unique identifier for that link.

At B.6.6, once a list of these key words has been formed, these are loaded into the application, after which begins to parse all historic data for these events. The application creates a transaction database as shown in Figure 1 - a table of all link clusters, L1 and L2, that fail within α seconds of each other.

This transaction database is then mined at B.6.8 using an association rule miner to create rules of the form 'L1 ←L2' - "if link cluster L2 fails, then link cluster L1 fails within α seconds" - with a confidence β, as discussed previously. These rules are preferably filtered for a minimum confidence (chosen by the operator depending on the number of 'false alarms' that can be tolerated if a prediction is not successful) and the resulting list is stored in respective repositories 52, 542, 562, and 582 at B.6.10, to be periodically validated, at B.6.12, in the manner described previously. In this respect, as shown in Figure 5, each of the management platform servers 51, 54, 56, and 58 has access to network log data, from which failure rules can then be derived.

The routers in the network plane produce live data about failures which are uploaded to the repository where the network management application obtains its data. Assuming the latency between event occurrence and detection by the network management application does not exceed α, the management application running on each server can monitor incoming logs for the network part for which it is responsible in real-time/near real-time at B.6.14 and if failure of all or a significant part of cluster L2 is detected at B.6.16 within a small time margin (with allowances for various delays in the network), the network reconfiguration process is triggered as follows.

It is assumed that the network management applications running on the management platform servers 51, 54, 56, 58 have sufficient privileges to read and alter all required parameters in the routers' Management Information Base (MIB). The applications 'know' which parameters in the MIB to alter (either determined dynamically using intelligence or pre-programmed) to force a link to be avoided in routes mapped by the routers for incoming packets (one method of doing this is to change the 'cost' of a link to a high value, this is used as an example henceforth). Once failure of cluster L1 is predicted as above, at B.6.18 a management application determines which routers to contact to adjust the corresponding link cost. This can either be pre-set (e.g. "only all central nodes in the autonomous system will make adjustments") or intelligently, for instance, based on current traffic flowing through the affected link cluster L1. This decision can be made again from accessing the MIB. For example, if one of the links in cluster L1 (i.e. the cluster that has failed) connects two routers, one of which has a buffer that's nearly full with traffic of high priority, this router could be chosen to adjust its link cost in a way that minimises loss of this important traffic. Variations in implementing this have been described earlier. Once the routers to be contacted have been decided upon, the application works with the SNMP engine at each server to generate Set requests to change the relevant MIB parameters (link cost, in this example). These SNMP messages are sent out, with a priority tag depending on how small α is. The MIB parameters are therefore altered as desired and this has the effect that the routing tables are changed so that the cluster L1 is assumed to have failed while it is still functional. L1 can continue handling packets that have already been addressed to it but not receive any more. Additionally, it is important for the application to ensure that the advantage gained by the prediction is not lost by routing elements returning to prior status quo if a 'hello' message is received from failing cluster L1 in the time α (i.e. between the prediction response taking effect and the actual failure of L1). One way of doing this is to instruct adjacent routing elements to L1 to ignore these 'hello' messages from the failing L1 cluster for a period α' (where α' ≥ α).

There could potentially be several ways of effecting the desired change, one of which is outlined above. This process has assumed that the network manager cannot issue direct commands to its agents and can only produce a change indirectly by altering the MIB itself.

If the failure of L1 occurs, at B.6.20 this data log is transmitted back to the historical data repository at B.6.24 and is used to monitor the 'correctness' of implemented predictive rules over time. If the failure of L1 does not occur as predicted, elements can receive or poll for, process and take action as normal to any 'hello' messages received after this period of α', as shown at B.6.22.

Various further modifications, by way of addition, substitution, or deletion, may be made to either of the above described embodiments to provide further embodiments, any and all of which are intended to be encompassed by the appended claims.

## Claims

1. A method of routing data in a data network, comprising:
a) storing failure rules defining predicted consequent failure(s) of one or more network components in dependence on the occurrence of one or more antecedent network events;
b) monitoring operation of the data network so as to observe the occurrence of any of the antecedent network events;
c) in the case of an antecedent network event being observed, using the stored failure rule or rules relating to the observed antecedent network event to predict the future failure of one or more network components; and
d) controlling the network components so as to change the routing of data in the network in dependence on the prediction of future failure of one or more of the network components.

2. A method according to claim 1, wherein one or more of the failure rules relate an observed consequent failure of a network link to an observed antecedent failure of a network link, the observations being historical network observations.

3. A method according to claim 1 or 2, wherein one or more of the failure rules relate an observed consequent failure of a network component to one or more observed antecedent network events, the antecedent network events being one or more from the group comprising: a network client application starting up; present time and/or date; and/or a network log message being generated.

4. A method according to any of claims 1 to 3, and further comprising storing failure rule confidence values, wherein a failure rule is used to predict a network failure in dependence on its confidence value.

5. A method according to any of claims 1 to 4, and further comprising validating a stored failure rule against network observation data obtained after the rule has been implemented so as to determine if said rule should still be applied.

6. A method according to any of claims 1 to 5, wherein the failure rules are generated by: i) analysing historical network log data so as to identify a data set of tuples of first network component failures followed by second network component failures within a pre-determined time thereafter; and ii) deriving the failure rules from the tuples in dependence on the frequency of occurrence of the identified tuples in the data set.

7. A method according to claim 6, wherein the deriving is performed using an association rule mining algorithm.

8. A method according to any of claims 1 to 7, wherein the failure rules are repeatedly updated in dependence on the observed network operation.

9. A method according to any of the preceding claims, wherein a hierarchy of failure rules is provided, comprising a plurality of sets of failure rules, each set relating to a part of the network, a set of failure rules belonging to a lower set in the hierarchy relating to a smaller part of the network than a set of rules belonging to a higher set in the hierarchy.

10. A method according to claim 9, wherein each set of failure rules is associated with a network management server responsible for a part of the network, a hierarchy of network management servers being provided corresponding to the hierarchy of the sets of failure rules, wherein a failure rule relating to network components in two or more parts of the network is administered by a network management server at a level in the hierarchy that encompasses the parts concerned.

11. A computer program or suite of computer programs so arranged such that when executed by a computer it/they cause the computer to operate according to any of the preceding claims.

12. A computer readable media storing the computer program or at least one of the suite of computer programs according to claim 11.

13. A system for routing data in a data network, comprising:
a) a rule store arranged to store failure rules defining predicted consequent failure(s) of one or more network components in dependence on the occurrence of one or more antecedent network events;
b) a network monitor arranged to monitor operation of the data network so as to observe the occurrence of any of the antecedent network events, and in the case of an antecedent network event being observed, use the stored failure rules or rules relating to the observed antecedent network event to predict the future failure of one or more network components; and
c) one or more network controllers arranged to change the routing of data in the network in dependence on the prediction of future failure of one or more of the network components..

14. A system, comprising:
a) means for storing failure rules defining predicted consequent failure(s) of one or more network components in dependence on the occurrence of one or more antecedent network events;
b) means for monitoring operation of the data network so as to observe the occurrence of any of the antecedent network events;
c) means for using the stored failure rules or rules relating to the observed antecedent network event to predict the future failure of one or more network components; and
d) means for controlling the network components so as to change the routing of data in the network in dependence on the prediction of future failure of one or more of the network components.

15. An apparatus, comprising:
at least one processor; and
at least one memory including computer program code
the at least one memory and the computer program code configured to, with the at least one processor, cause the apparatus to perform at least the following:
a) store failure rules defining predicted consequent failure(s) of one or more network components in dependence on the occurrence of one or more antecedent network events;
b) monitor operation of the data network so as to observe the occurrence of any of the antecedent network events;
c) in the case of an antecedent network events being observed, use the stored failure rules or rules relating to the observed antecedent network event to predict the future failure of one or more network components; and
d) control the network components so as to change the routing of data in the network in dependence on the prediction of future failure of one or more of the network components.
